# EUROPÄISCHE PATENTSCHRIFT

(11) **EP 1 362 281 B1**
(45) Veröffentlichungstag und Bekanntmachung des Hinweises auf die Patenterteilung: **08.03.2017**
(21) Anmeldenummer: 01271571.0
(22) Anmeldetag: 04.12.2001
(51) Int. Cl.: G06F 3/01, G06F 3/038, G05B 19/418, G05B 19/409

(54) **ANWENDERGESTEUERTE VERKNÜPFUNG VON INFORMATIONEN INNERHALB EINES AUGMENTED-REALITY-SYSTEMS**
USER-CONTROLLED LINK OF INFORMATION WITHIN AN AUGMENTED REALITY SYSTEM
ENCHAINEMENT D'INFORMATIONS COMMANDÉ PAR L'UTILISATEUR AU SEIN D'UN SYSTEME DE REALITÉ AUGMENTÉE

(30) Priorität: 18.12.2000 DE 10063089
(43) Veröffentlichungstag der Anmeldung: 19.11.2003
(73) Patentinhaber: Siemens Aktiengesellschaft, 80333 München (DE)
(72) Erfinder: TRIEBFÜRST, GUNTHARD, 90409 Nürnberg (DE)
(86) Internationale Anmeldenummer: PCT/DE2001/004543
(87) Internationale Veröffentlichungsnummer: WO 2002/050649

(56) Entgegenhaltungen:
- EP-A- 0 773 516
- WO-A1-00/52541
- DE-A- 4 110 649
- US-A- 4 977 509
- US-A- 6 091 546
- REKIMOTO J ET AL: "Augment-able reality: situated communication through physical and digital spaces", WEARABLE COMPUTERS, 1998. DIGEST OF PAPERS. SECOND INTERNATIONAL SYMPO SIUM ON PITTSBURGH, PA, USA 19-20 OCT. 1998, LOS ALAMITOS, CA, USA,IEEE COMPUT. SOC, US LNKD- DOI:10.1109/ISWC.1998.729531, 19 October 1998 (1998-10-19), pages 68-75, XP010312817, ISBN: 978-0-8186-9074-7
- REKIMOTO J ET AL: "THE WORLD THROUGH THE COMPUTER: COMPUTER AUGMENTED INTERACTION WITHREAL WORLD ENVIRONMENTS", UIST '95. 8TH ANNUAL SYMPOSIUM ON USER INTERFACE SOFTWARE AND TECHNOLOGY. PROCEEDINGS OF THE ACM SYMPOSIUM ON USER INTERFACE SOFTWARE AND TECHNOLOGY. PITTSBURGH, PA, NOV. 14 - 17, 1995; [ACM SYMPOSIUM ON USER INTERFACE SOFTWARE AND TECHNOLOGY], NEW Y, 14 November 1995 (1995-11-14), pages 29-36, XP000634412, ISBN: 978-0-89791-709-4
- STEVEN FEINER ET AL: "Windows on the World: 2D Windows for 3D Augmented Reality", PROCEEDINGS OF THE ACM SYMPOSIUM ON USER INTERFACE SOFTWARE AND TECHNOLOGY, ATLANTA, GEORGIA, NOVEMBER 3-5, 1993, ACM PRESS, US, 3 November 1993 (1993-11-03), pages 145-155, XP002685270, ISBN: 978-0-89791-628-8

## Beschreibung

Anwendergesteuerte Verknüpfung von Informationen innerhalb eines Augmented-Reality-Systems.

Die Erfindung betrifft ein System und Verfahren zur anwendergesteuerten Verknüpfung von Informationen innerhalb eines Augmented-Reality-Systems, sowie ein Computerprogrammprodukt zur Durchführung des Verfahrens.

Ein derartiges System und Verfahren kommt beispielsweise im Bereich der Automatisierungstechnik, bei Produktions- und Werkzeugmaschinen, bei Diagnose-/Serviceunterstützungssystemen sowie für komplexe Komponenten, Geräte und Systeme, wie beispielsweise Fahrzeuge und industrielle Maschinen und Anlagen zum Einsatz.

Aus der WO 00/52541 ist ein System und Verfahren zur situationsgerechten Unterstützung der Interaktion zwischen einem Anwender und einer technischen Vorrichtung mit Hilfe von Augmented-Reality-Technologien bekannt. Eine konkrete Arbeitssituation wird dabei automatisch erfasst, analysiert und aus statischen Informationen werden automatisch für die analysierte Arbeitssituation relevante Informationen ausgewählt und dargestellt.

Außerdem sind weitere Augmented-Reality Systeme aus dem Stand der Technik bekannt, wie zum Beispiel: REKIMOTO J ET AL: "Augment-able reality: situated communication through physical and digital spaces", SECOND INTERNATIONAL SYMPOSIUM ON WEARABLE COMPUTERS, PITTSBURGH, PA, USA 19-20 OCT. 1998, Seiten 68-75. LNKD-DOI:10.1109/ISWC.1998.729531, 19. Oder auch: REKIMOTO J ET AL: "The World through the Computer: Computer Augmented Interaction with Real World Environments", 8TH ANNUAL SYMPOSIUM ON USER INTERFACE SOFTWARE AND TECHNOLOGY. PROCEEDINGS OF THE ACM SYMPOSIUM ON USER INTERFACE SOFTWARE AND TECHNOLOGY (UIST '95), PITTSBURGH, PA, NOV. 14 - 17, 1995, Seiten 29-36. Oder auch: STEVEN FEINER ET AL: "Windows on the World: 2D Windows for 3D Augmented Reality",PROCEEDINGS OF THE ACM SYMPOSIUM ON USER INTERFACE SOFTWARE AND TECHNOLOGY (UIST '93), ATLANTA, GEORGIA, NOVEMBER 3-5, 1993, ACM PRESS, US, Seiten 145-155.

Der Erfindung liegt die Aufgabe zugrunde, die Informationsdarstellung innerhalb eines Augmented-Reality-Systems hinsichtlich der Anwenderfreundlichkeit zu verbessern.

Diese Aufgabe wird gelöst durch ein System wie in Anspruch 1 beansprucht, durch ein Verfahren wie in Anspruch 8 beansprucht, und durch ein Computerprogrammprodukt wie in Anspruch 15 beansprucht.

Das erfindungsgemäße System bzw. Verfahren lässt sich vorzugsweise in einer Augmented-Reality-Umgebung einsetzen. Objekte im Sichtfeld des Anwenders werden durch das System erfasst und erkannt und es wird in Abhängigkeit vom erkannten Objekt eine bestimmte mit diesem Objekt verknüpfte Information in eine Anzeigevorrichtung eingeblendet. In bekannten Systemen dieser Art hat der Anwender keine Möglichkeit, Inhalt und Darstellungsart dieser angezeigten Information direkt zu beeinflussen. Gemäß der Erfindung erhält der Anwender diese Möglichkeit. Er kann durch Befehle die Verknüpfung zwischen den angezeigten Informationen und den zeitgleich erfassten Objekten steuern und wird damit vom passiven Informationsempfänger zum aktiven, in den Prozess der Informationsbereitstellung eingreifenden Nutzer.

Der Erfindung liegt die Erkenntnis zugrunde, dass bei einem üblichen Augmented-Reality-System die angezeigte Information "labil" ist. Wenn die typischerweise am Kopf des Anwenders befestigte Bilderfassungseinheit wegen einer Kopfbewegung das Objekt, welchem die Information zugeordnet ist, nicht mehr erfassen kann, wird diese Information nicht mehr angezeigt. Der Anwender muss dann durch Ausprobieren verschiedener Kopfstellungen versuchen, sich die hinterlegte Information wieder einblenden zu lassen, was zeitraubend und frustrierend sein kann. Hat die Bilderfassungseinheit das Objekt wieder erfasst, muss der Anwender versuchen, seinen Kopf bzw. seine Position so lange ruhig zu halten, bis er die angezeigten Informationen gelesen hat.

Im Gegensatz zu einem üblichen Augmented-Reality-System, wo der Anwender zu einem relativ unnatürlichen Verhalten gezwungen wird, was sowohl ergonomische Grundprinzipien verletzt als auch eine Ablehnung des gesamten Systems provozieren kann, ist die Steuereinheit zum durch die Befehle des Anwenders steuerbaren, reversiblen Auftrennen der Verknüpfung zwischen den angezeigten Informationen und den zeitgleich erfassten Objekten, die Anzeigevorrichtung zum Anzeigen der Information unabhängig von den zeitgleich erfassten Objekten vorgesehen. Hierdurch wird erreicht, dass die angezeigten Informationen durch Befehle des Anwenders auf der Anzeigevorrichtung quasi "eingefroren" werden und solange kontextunabhängig angezeigt bleiben, bis durch erneute Befehle des Anwenders die Informationsanzeige wieder "aufgetaut" wird. Insgesamt ergeben sich aus Sicht des Anwenders folgende Vorteile: Die virtuelle Information wird zunächst kontextabhängig, also dem erfassten Objekt zugeordnet, angezeigt und gibt dem Anwender somit Hinweise, auf welches reale Objekt sich die Information bezieht. Die Überlagerung im Sichtfeld des Anwenders ist jedoch labil und störanfällig, da sie abhängig von der stetigen Verbindung der Kamera zu dem markierten Objekt ist. Um die überlagerten Informationen zu stabilisieren, kann der Anwender die angezeigte Information über einen Befehl "einfrieren" und in Ruhe die kontextabhängigen Informationen kontextunabhängig betrachten, ohne Angst haben zu müssen, dass durch eine unachtsame Bewegung der Kontakt unterbrochen wird. Durch einen weiteren Befehl hebt der Anwender die Stabilisierung wieder auf.

Die Befehle des Anwenders, die vom System erfasst werden, können unterschiedlicher Art sein. Der Anwender kann durch Drücken einer Taste, durch Gestik, Mimik öder auch nur durch eine Augenbewegung die Verknüpfung steuern. Besonders vorteilhaft ist jedoch ein System bei welchem die Befehlserfassungseinheit zur Erfassung von Sprachbefehlen des Anwenders vorgesehen ist. Die Sprachinteraktion ist deswegen vorteilhaft, weil der Anwender über Sprache schneller reagieren kann. Müsste der Anwender die Funktionalität über eine Taste auslösen, könnten genau die dafür nötigen Bewegungen die Verbindung der Bilderfassungseinheit zum Objekt unterbrechen.

Um eine Kommunikation in beide Richtungen zu erreichen, wird vorgeschlagen, dass die Steuereinheit zur Erzeugung von Rückmeldungen an den Anwender vorgesehen ist und Rückmeldevorrichtungen zur Übertragung der Rückmeldungen an den Anwender vorgesehen sind. Es ist besonders sinnvoll, die Rückmeldungen als akustische Rückmeldungen auszuführen.

Eine vorteilhafte Ausgestaltung des System ist dadurch gekennzeichnet, dass zum Erkennen der erfassten Objekte diese mit mindestens einem Marker versehen sind, dessen von der Bilderfassungseinheit erfassbare Struktur von der Steuerungseinheit erkennbar ist und dass dem erfassten und erkannten Marker Informationen zugeordnet sind. Auch andere übliche sogenannte Tracking-Verfahren könnten zum Einsatz kommen, so könnte die Bilderfassungseinheit die Struktur oder Teile der Struktur des erfassten Objekts erkennen und für dieses Objekt hinterlegte virtuelle, kontextabhängige Informationen könnten angezeigt werden. Die so aufgerufene Information bezeichnet man auch als getrackte Information.

Damit die angezeigten Informationen vom Anwender leicht dem erfassten Objekt zugeordnet werden können und um Vorteile der Augmented-Reality-Technologie nutzen zu können, wird vorgeschlagen, dass als Anzeigevorrichtung ein Head-Mounted Display (z. B. eine Datenbrille) benutzt wird und die Informationen in das Sichtfeld des Anwenders eingeblendet werden.

Das vorgeschlagene System ist vorteilhaft einsetzbar in einer Augmented-Reality-Umgebung zur kontextunabhängigen Darstellung der zuvor kontextabhängig aufgerufenen Informationen auf der Anzeigevorrichtung, wobei die kontextunabhängige Darstellung durch die Befehle des Anwenders gestartet und beendet werden kann.

Im Folgenden wird die Erfindung anhand des in den Figuren dargestellten Ausführungsbeispiels näher beschrieben und erläutert.

Es zeigen:
- FIG 1: ein Ausführungsbeispiel eines Systems in einer Augmented-Reality-Umgebung,
- FIG 2: das Sichtfeld eines Anwenders bei kontextabhängiger Darstellung der Information,
- FIG 3: das Sichtfeld des Anwenders bei kontextunabhängiger Darstellung der Information und
- FIG 4: eine schematische Darstellung des interaktiven Befehlsprozesses.

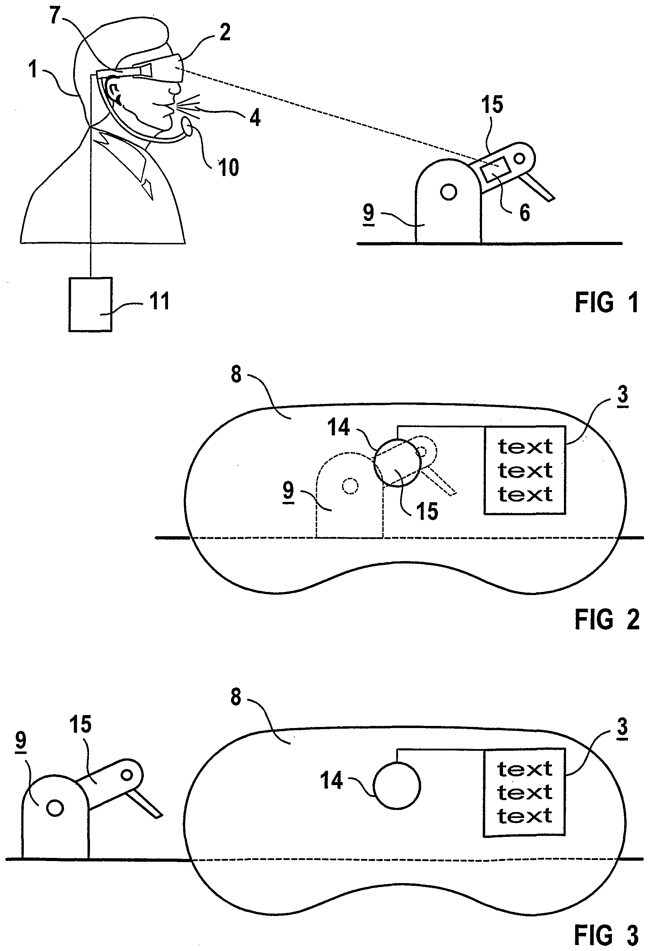

Figur 1 zeigt ein Ausführungsbeispiel eines Systems in einer Augmented-Reality-Umgebung, bei dem ein Anwender 1 ein Head-Mounted Display 2 trägt und Befehle 4 über ein Headset-Mikrofon 10 an eine Steuerungseinheit 11 gibt. Am Head-Mounted Display 2 des Anwenders 1 ist eine Videokamera 7 montiert, die ein Objekt 9, z. B. eine Werkzeugmaschine, mit einer Teilkomponente 15 im Sichtfeld des Anwenders 1 erfasst. Die Werkzeugmaschine 9 ist mit einem Marker 6 markiert.

In dem in Figur 1 gezeigten Szenario soll ein Service-techniker 1 eine defekte Komponente 15 einer Werkzeugmaschine 9 reparieren. Er hat eine Steuerungseinheit 11 in Form eines mobilen Computers am Körper und trägt ein Head-Mounted Display 2. Der Servicetechniker 1 blickt auf die Komponente 15, die mit einem Marker 6 gekennzeichnet ist und mit Augmented-Reality-Information 3 hinterlegt ist. Die Kamera 7 am Head-Mounted Display 2 erfasst den Marker 6 und blendet die entsprechende virtuelle Information 3 in das Display 2 und damit in das Sichtfeld 8 des Technikers 1 ein. Der Techniker 1 kann Befehle 4 über ein Headset-Mikrofon 10 an die Steuerungseinheit 11 geben.

In Figur 2 ist das Sichtfeld 8 des Technikers 1 bei kontextabhängiger Darstellung der Information 3 und das betrachtete Objekt 9 mit einer Komponente 15 dargestellt. Im gezeigten Fall der kontextabhängigen Darstellung wird die augmentierte Information 3 im Sichtfeld 8 des Technikers 1 so dargestellt, z. B. verbunden mit einem farbigen Kreis 14 um eine Komponente 15 der Werkzeugmaschine 9, dass die Information 3 für den Techniker 1 eindeutig dieser Komponente 15 zugeordnet werden kann. Die augmentierte Information 3 enthält im Anwendungsbeispiel textuelle Anweisungen, mit welchem Werkzeug und auf welche Weise diese Komponente 15 demontiert werden kann. Der Techniker 1 sieht die mit dem Kreis 14 gekennzeichnete Komponente 15 in seinem zentralen Sichtfeld und registriert die textuellen Anweisungen im peripheren Sichtfeld. Auch bei Kopfbewegungen des Technikers 1 bleibt die Information 3 im Display 2 mit der Komponente 15 der Werkzeugmaschine 9 verknüpft. Die angezeigte Information 3 ist also frei beweglich auf dem Display 2 und damit im Sichtfeld 8 des Technikers 1.

Im Gegensatz dazu zeigt die Figur 3 das Sichtfeld 8 des Technikers 1 bei kontextunabhängiger Darstellung der Information 3. Im diesem Fall bleibt die augmentierte Information 3 fest im Display 2 bzw. im Sichtfeld 8 des Technikers 1 eingeblendet auch wenn dieser den Kopf bewegt und die Werkzeugmaschine 9 dadurch nicht mehr in seinem Sichtfeld 8 liegt.

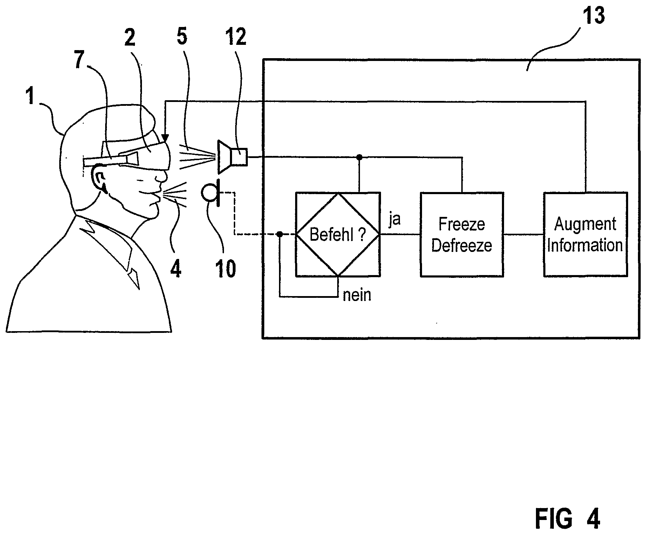

In Figur 4 wird der interaktive, in der Steuereinheit 11 implementierte Befehlsprozess 13 am Beispiel der akustischen Variante schematisch dargestellt. Der Befehlsprozess an sich wird mit dem Blockschaltbild 13 verdeutlicht, zusätzlich sind der Techniker 1 mit einem Head-Mounted Display 2 mit Kamera 7, ein Mikrofon 10 und ein Lautsprecher 12 dargestellt. Die Sprachbefehle des Technikers 1 sind mit dem Bezugszeichen 4, die akustischen Rückmeldungen der Steuereinheit 11 mit dem Bezugszeichen 5 gekennzeichnet.

Um die in seinem Sichtfeld 8 dargestellten Textinformationen 3 in Ruhe lesen zu können, auch wenn er seinen Kopf bewegt, gibt der Techniker 1 einen Sprachbefehl 4 über das Mikrofon 10 an die Steuerungseinheit 11. In dieser läuft daraufhin der Befehlsprozess 13 ab. Wird der Befehl nicht erkannt, wird eine diesbezügliche akustische Rückmeldung 5 über einen Lautsprecher bzw. einen Kopfhörer 12 an den Techniker 1 gegeben. Auch das Erkennen eines Befehls 4 wird akustisch rückgemeldet. Im Beispiel aktiviert der Techniker 1 über das Sprachkommando "Freeze" die Auftrennung der Verknüpfung zwischen der angezeigten Information 3 und dem Objekt 9. Die Steuerungseinheit 11 veranlasst in diesem Fall, dass die Information 3 auf dem Display 2 "eingefroren" bzw. stabilisiert wird. Der Techniker 1 hat nun die Möglichkeit, seinen Kopf frei zu bewegen, ohne dass die Information 3 aus seinem Sichtfeld 8 verschwindet. Beispielsweise beginnt er die Information 3 zu lesen: Zunächst muss er einen bestimmten Schraubenschlüssel aus seinem Werkzeugkoffer holen. Während er zum Werkzeugkoffer geht, informiert er sich anhand der weiterhin angezeigten Information 3 schon über die nächsten Schritte. Er kennt nun den Ablauf der Demontage und braucht die augmentierten aber "eingefrorenen" Informationen nicht mehr. Mit einem weiteren Sprachkommando 4, z. B. "Defreeze", stößt er den Befehlsprozess 13 wieder an. Mit diesem Befehl 4 wird die Steuerungseinheit 11 veranlasst, das "Einfrieren" rückgängig zu machen, die Information 3 also wieder kontextabhängig darzustellen. Sofern das Objekt 9, dem die Information 3 zugeordnet ist, sich nicht wieder im Sichtfeld 8 des Technikers 1 befindet, wird diese Information 3 aus dem Display 2 gelöscht.

Der Vorteil der Augmented-Reality-Technologie, dass die virtuelle Information 3 direkt mit dem zu ihr gehörigen realen Objekt 9 verknüpft ist und deswegen exakt diesem zugeordnet werden kann, wird somit mit den Vorteilen kombiniert, die eine kontextunabhängige Informationsanzeige dem Anwender 1 bietet. Mit Hilfe einer "Freeze"-Funktionalität kann getrackte, ursprünglich kontextabhängige augmentierte Information 3 nach Belieben kontextunabhängig dargestellt werden, so dass diese zuvor "labile" Information 3 stabil wird. Das Aktivieren und Deaktivieren dieser Funktionalität erfolgt aus Gründen der Reaktionsgeschwindigkeit vorteilhaft über Spracheingabe.

Zusammenfassend betrifft die Erfindung somit ein System und ein Verfahren in einer Augmented-Reality-Umgebung, welches die Informationsdarstellung hinsichtlich der Anwenderfreundlichkeit verbessert. Das System besteht aus einer Anzeigevorrichtung 2 zum Anzeigen von Informationen 3, einer Bilderfassungseinheit 7 zur Erfassung von Objekten 9 in einem Sichtfeld 8 eines Anwenders 1, einer Befehlserfassungseinheit 10 zur Erfassung von Befehlen 4 des Anwenders 1 und einer Steuerungseinheit 11 zum Ansteuern der Anzeigevorrichtung 2, zum Erkennen der von der Bilderfassungseinheit 7 erfassten Objekte 9 und zur Verarbeitung der durch die Befehlserfassungseinheit 10 erfassten Befehle 4 des Anwenders 1, wobei eine durch die Befehle 4 des Anwenders 1 steuerbare Verknüpfung zwischen den angezeigten Informationen 3 und den zeitgleich erfassten Objekten 9 vorgesehen ist.

## Patentansprüche

1. System, bestehend aus
- einer Anzeigevorrichtung (2) zum Anzeigen von Informationen (3),
- einer Bilderfassungseinheit (7) zur Erfassung von Objekten (9) in einem Sichtfeld (8) eines Anwenders (1),
- einer Befehlserfassungseinheit (10) zur Erfassung von Befehlen (4) des Anwenders (1) und
- einer Steuerungseinheit (11) zum Ansteuern der Anzeigevorrichtung (2), zum Erkennen der von der Bilderfassungseinheit (7) erfassten Objekte (9) und zur Verarbeitung der durch die Befehlserfassungseinheit (10) erfassten Befehle (4) des Anwenders (1),
wobei eine durch die Befehle (4) des Anwenders (1) steuerbare Verknüpfung zwischen den angezeigten Informationen (3) und den zeitgleich erfassten Objekten (9) vorgesehen ist, und
wobei das System weiterhin in einem ersten Betriebsmodus zum Erfassen und Erkennen von Objekten (9) im Sichtfeld des Anwenders (1), und in Abhängigkeit von einem erkannten Objekt (9) zum Anzeigen einer bestimmten mit diesem aktuell erkannten Objekt (9) verknüpften Information auf der Anzeigevorrichtung (2), ausgebildet und eingerichtet ist,
**dadurch gekennzeichnet,**
**dass** das System weiterhin zum Umschalten in einen zweiten Betriebsmodus durch einen ersten Befehl des Anwenders ausgebildet ist, wobei in dem zweiten Betriebsmodus die beim Umschalten in den zweiten Betriebsmodus auf der Anzeigevorrichtung (2) angezeigte Information so lange dauerhaft an derselben Stelle wie
zum Zeitpunkt des ersten Befehls angezeigt bleibt, bis durch einen zweiten Befehl des Anwenders die dauerhafte Anzeige dieser Information wieder beendet wird.

2. System nach Anspruch 1,
**dadurch gekennzeichnet,**
**dass** die Befehlserfassungseinheit (10) zur Erfassung von Sprachbefehlen (4) des Anwenders (1) vorgesehen ist.

3. System nach einem der vorhergehenden Ansprüche,
**dadurch gekennzeichnet,**
**dass** die Steuereinheit (11) zur Erzeugung von Rückmeldungen (5) an den Anwender (1) vorgesehen ist und Rückmeldevorrichtungen (12) zur Übertragung der Rückmeldungen (5) an den Anwender (1) vorgesehen sind.

4. System nach Anspruch 4,
**dadurch gekennzeichnet,**
**dass** die Rückmeldungen (5) als akustische Rückmeldungen ausgeführt sind.

5. System nach einem der vorhergehenden Ansprüche,
**dadurch gekennzeichnet,**
**dass** zum Erkennen der erfassten Objekte (9) diese mit mindestens einem Marker (6) versehen sind, dessen von der Bilderfassungseinheit (7) erfassbare Struktur von der Steuerungseinheit (11) erkennbar ist und dass dem erfassten und erkannten Marker (6) Informationen (3) zugeordnet sind.

6. System nach einem der vorhergehenden Ansprüche,
**dadurch gekennzeichnet,**
**dass** die Anzeigevorrichtung (2) ein Head-Mounted Display ist und die Informationen (3) zur Einblendung in das Sichtfeld (8) des Anwenders (1) vorgesehen sind.

7. System nach einem der vorhergehenden Ansprüche in einer Augmented-Reality-Umgebung zur kontextunabhängigen Darstellung der zuvor kontextabhängig aufgerufenen Informationen (3) auf der Anzeigevorrichtung (2), wobei die kontextunabhängige Darstellung durch die Befehle (4) des Anwenders (1) gestartet und beendet werden kann.

8. Verfahren
- zum Anzeigen von Informationen (3),
- zur Erfassung von Objekten (9) in einem Sichtfeld (8) eines Anwenders (1),
- zur Erfassung von Befehlen (4) des Anwenders (1),
- zum Erkennen der von einer Bilderfassungseinheit (7) erfassten Objekte (9) und
- zur Verarbeitung von den durch eine Befehlserfassungseinheit (10) erfassten Befehlen (4) des Anwenders (1)
wobei eine Verknüpfung zwischen den angezeigten Informationen (3) und den zeitgleich erfassten Objekten (9) durch die Befehle (4) des Anwenders (1) gesteuert wird,
wobei in einem ersten Betriebsmodus von Objekten (9) im Sichtfeld des Anwenders (1) erfasst und erkannt werden, und in Abhängigkeit von einem erkannten Objekt (9) eine bestimmte mit diesem aktuell erfassten Objekt (9) verknüpfte Information auf der Anzeigevorrichtung (2) angezeigt wird,
**dadurch gekennzeichnet,**
**dass** durch einen ersten Befehl des Anwenders ein Umschalten in einen zweiten Betriebsmodus erfolgt, wobei in dem zweiten Betriebsmodus die beim Umschalten in den zweiten Betriebsmodus auf der Anzeigevorrichtung (2) angezeigte Information so lange dauerhaft an derselben Stelle wie zum Zeitpunkt des ersten Befehls angezeigt
bleibt, bis durch einen zweiten Befehl des Anwenders die dauerhafte Anzeige dieser Information wieder beendet wird.

9. Verfahren nach Anspruch 8,
**dadurch gekennzeichnet,**
**dass** die Befehle (4) des Anwenders Sprachbefehle sind.

10. Verfahren nach einem der Ansprüche 8 oder 9,
**dadurch gekennzeichnet,**
**dass** Rückmeldungen (5) an den Anwender (1) durch eine Steuereinheit (11) erzeugt und mittels einer Rückmeldevorrichtung (12) übertragen werden.

11. Verfahren nach Anspruch 10,
**dadurch gekennzeichnet,**
**dass** die Rückmeldungen (5) als akustische Rückmeldungen ausgeführt sind.

12. Verfahren nach einem der Ansprüche 8 bis 11,
**dadurch gekennzeichnet,**
**dass** zum Erkennen der erfassten Objekte (9) diese mit mindestens einem Marker (6) versehen sind, dessen Struktur von der Bilderfassungseinheit (7) erfasst und von der Steuerungseinheit (11) erkannt wird und dass dem erfassten und erkannten Marker (6) Informationen (3) zugeordnet werden.

13. Verfahren nach einem der Ansprüche 8 bis 12,
**dadurch gekennzeichnet,**
**dass** die Informationen (3) mittels eines Head-Mounted Displays (2) in das Sichtfeld (8) des Anwenders (1) eingeblendet werden.

14. Verfahren nach einem der Ansprüche 8 bis 13 zur
Verwendung in einer Augmented-Reality-Umgebung zur kontextunabhängigen Darstellung der zuvor kontextabhängig aufgerufenen Informationen (3) auf der Anzeigevorrichtung (2), wobei die kontextunabhängige Darstellung durch die Befehle (4) des Anwenders (1) gestartet und beendet wird.

15. Computerprogrammprodukt zur Programmierung einer Steuerungseinheit (11) in einem System nach einem der Ansprüche 1 bis 7.

## Claims

1. System consisting of
- a display apparatus (2) for displaying information (3),
- an image capture unit (7) for capturing objects (9) in a field of view (8) of a user (1),
- a command capture unit (10) for capturing commands (4) from the user (1), and
- a control unit (11) for controlling the display apparatus (2), for identifying the objects (9) captured by the image capture unit (7) and for processing the commands (4) from the user (1) which are captured by the command capture unit (10),
a link between the displayed information (3) and the objects (9) captured at the same time being provided, which link can be controlled by the commands (4) from the user (1), and
the system also being designed and set up, in a first operating mode, to capture and identify objects (9) in the field of view of the user (1) and, on the basis of an identified object (9), to display a particular item of information linked to this currently identified object (9) on the display apparatus (2),
**characterized in that**
the system is also designed to change over to a second operating mode as a result of a first command from the user, the information displayed on the display apparatus (2) when changing over to the second operating mode being permanently displayed at the same location as at the time of the first command in the second operating mode until the permanent display of this information is terminated again by a second command from the user.

2. System according to Claim 1,
**characterized in that**
the command capture unit (10) is intended to capture voice commands (4) from the user (1).

3. System according to one of the preceding claims,
**characterized in that**
the control unit (11) is intended to generate feedback (5) for the user (1), and feedback apparatuses (12) are intended to transmit the feedback (5) to the user (1).

4. System according to Claim 4,
**characterized in that**
the feedback (5) is in the form of acoustic feedback.

5. System according to one of the preceding claims,
**characterized in that**
in order to identify the captured objects (9), the latter are provided with at least one marker (6), the structure of which can be captured by the image capture unit (7) and can be identified by the control unit (11), and **in that** information (3) is assigned to the captured and identified marker (6).

6. System according to one of the preceding claims,
**characterized in that**
the display apparatus (2) is a head-mounted display and the information (3) is intended to be superimposed in the field of view (8) of the user (1).

7. System according to one of the preceding claims in an augmented-reality environment for the context-independent representation of the information (3) previously called in a context-dependent manner on the display apparatus (2), the context-independent representation being able to be started and terminated by the commands (4) from the user (1).

8. Method
- for displaying information (3),
- for capturing objects (9) in a field of view (8) of a user (1),
- for capturing commands (4) from the user (1),
- for identifying the objects (9) captured by an image capture unit (7), and
- for processing the commands (4) from the user (1) which are captured by a command capture unit (10),
a link between the displayed information (3) and the objects (9) captured at the same time being controlled by the commands (4) from the user (1),
objects (9) in the field of view of the user (1) being captured and identified in a first operating mode and, on the basis of an identified object (9), a particular item of information linked to this currently captured object (9) being displayed on the display apparatus (2), **characterized in that**
a first command from the user causes a changeover to a second operating mode, the information displayed on the display apparatus (2) when changing over to the second operating mode being permanently displayed at the same location as at the time of the first command in the second operating mode until the permanent display of this information is terminated again by a second command from the user.

9. Method according to Claim 8,
**characterized in that**
the commands (4) from the user are voice commands.

10. Method according to either of Claims 8 and 9,
**characterized in that**
feedback (5) for the user (1) is generated by a control unit (11) and is transmitted by means of a feedback apparatus (12).

11. Method according to Claim 10,
**characterized in that**
the feedback (5) is in the form of acoustic feedback.

12. Method according to one of Claims 8 to 11,
**characterized in that**
in order to identify the captured objects (9), the latter are provided with at least one marker (6), the structure of which is captured by the image capture unit (7) and is identified by the control unit (11), and **in that** information (3) is assigned to the captured and identified marker (6).

13. Method according to one of Claims 8 to 12,
**characterized in that**
the information (3) is superimposed in the field of view (8) of the user (1) by means of a head-mounted display (2).

14. Method according to one of Claims 8 to 13 for use in an augmented-reality environment for the context-independent representation of the information (3) previously called in a context-dependent manner on the display apparatus (2), the context-independent representation being started and terminated by the commands (4) from the user (1).

15. Computer program product for programming a control unit (11) in a system according to one of Claims 1 to 7.

## Revendications

1. Système, composé
- d'un dispositif d'affichage (2) pour afficher des informations (3),
- d'une unité de détection d'image (7) pour détecter des objets (9) dans un champ de vision (8) d'un utilisateur (1),
- d'une unité de détection d'instruction (10) pour détecter des instructions (4) de l'utilisateur (1), et
- d'une unité de commande (11) pour commander le dispositif d'affichage (2), pour reconnaître les objets (9) détectés par l'unité de détection d'image (7) et pour traiter les instructions (4) de l'utilisateur (1) qui ont été détectées par l'unité de détection d'instruction (10),
une liaison commandable par les instructions (4) de l'utilisateur (1) étant prévue entre les informations (3) affichées et les objets (9) détectés en même temps, et
le système étant en outre conçu et configuré dans un premier mode de fonctionnement pour détecter et reconnaitre des objets (9) dans le champ de vision de l'utilisateur (1), et en fonction d'un objet (9) reconnu pour afficher une information déterminée, associée à cet objet (9) actuellement reconnu, sur le dispositif d'affichage (2), **caractérisé en ce que**
le système est en outre conçu pour commuter dans un second mode de fonctionnement par une première instruction de l'utilisateur, dans ledit second mode de fonctionnement l'information affichée sur le dispositif d'affichage (2) lors de la commutation dans le second mode de fonctionnement restant affichée en continu au même endroit qu'au moment de la première instruction, jusqu'à ce qu'une seconde instruction de l'utilisateur arrête l'affichage en continu de cette information.

2. Système selon la revendication 1,
**caractérisé en ce que**
l'unité de détection d'instruction (10) est prévue pour détecter des instructions vocales (4) de l'utilisateur (1).

3. Système selon l'une des revendications précédentes,
**caractérisé en ce que**
l'unité de commande (11) est prévue pour générer des retours d'information (5) vers l'utilisateur (1), et des dispositifs de retour d'information (12) sont prévus pour transmettre les retours d'information (5) à l'utilisateur.

4. Système selon la revendication 4,
**caractérisé en ce que**
les retours d'information (5) se présentent sous forme de retours d'information acoustiques.

5. Système selon l'une des revendications précédentes,
**caractérisé en ce que**
pour reconnaître les objets (9) détectés, ces derniers sont pourvus d'au moins un marqueur (6), dont la structure détectable par l'unité de détection d'image (7) peut être reconnue par l'unité de commande (11), et **en ce que** des informations (3) sont associées au marqueur (6) détecté et reconnu.

6. Système selon l'une des revendications précédentes,
**caractérisé en ce que**
le dispositif d'affichage (2) est un dispositif du type Head-Mounted-Display et les informations (3) sont prévues pour être insérées dans le champ de vision (8) de l'utilisateur (1).

7. Système selon l'une des revendications précédentes dans un environnement de réalité augmentée pour la présentation indépendante du contexte des informations (3) appelées auparavant en fonction du contexte sur le dispositif d'affichage (2), la présentation indépendante du contexte pouvant être démarrée et arrêtée par les instructions (4) de l'utilisateur (1).

8. Procédé
- pour afficher des informations (3),
- pour détecter des objets (9) dans un champ de vision (8) d'un utilisateur (1),
- pour détecter des instructions (4) de l'utilisateur (1),
- pour reconnaître les objets (9) détectés par une unité de détection d'image (7) et
- pour traiter les instructions (4) de l'utilisateur (1), qui ont été détectées par une unité de détection d'instruction (10),
une liaison entre les informations (3) affichées et les objets (9) détectés en même temps étant commandée par les instructions (4) de l'utilisateur (1),
dans un premier mode de fonctionnement des objets (9) étant détectés et reconnus dans le champ de vision de l'utilisateur (1), et en fonction d'un objet (9) reconnu une information déterminée, associée à cet objet (9) actuellement reconnu, étant affichée sur le dispositif d'affichage (2),
**caractérisé en ce que**
une première instruction de l'utilisateur entraîne une commutation dans un second mode de fonctionnement, dans ledit second mode de fonctionnement l'information affichée sur le dispositif d'affichage (2) lors de la commutation dans le second mode de fonctionnement restant affichée en continu au même endroit qu'au moment de la première instruction, jusqu'à ce qu'une seconde instruction de l'utilisateur arrête l'affichage en continu de cette information.

9. Procédé selon la revendication 8,
**caractérisé en ce que**
les instructions (4) de l'utilisateur sont des instructions vocales.

10. Procédé selon l'une des revendications 8 ou 9,
**caractérisé en ce que** des retours d'information (5) vers l'utilisateur (1) sont générés par une unité de commande (11) et transmis par un dispositif de retour d'information (12).

11. Procédé selon la revendication 10,
**caractérisé en ce que** les retours d'information (5) se présentent sous forme de retours d'information acoustiques.

12. Procédé selon l'une des revendications 8 à 11,
**caractérisé en ce que**
pour reconnaître les objets (9) détectés, ces derniers sont pourvus d'un marqueur (6), dont la structure est détectée par l'unité de détection d'image (7) et reconnue par l'unité de commande (11), et **en ce que** le marqueur (6) détecté et reconnu se voit associer des informations (3).

13. Procédé selon l'une des revendications 8 à 12,
**caractérisé en ce que**
les informations (3) sont insérées dans le champ de vision (8) de l'utilisateur (1) au moyen d'un dispositif du type Head-Mounted-Display (2).

14. Procédé selon l'une des revendications 8 à 13 destiné à être utilisé dans un environnement de réalité augmentée pour la présentation indépendante du contexte des informations (3) affichées sur le dispositif d'affichage (2) appelées auparavant en fonction du contexte, la présentation indépendante du contexte étant démarrée et arrêtée par les instructions (4) de l'utilisateur (1).

15. Produit de programme informatique pour la programmation d'une unité de commande (11) dans un système selon l'une des revendications 1 à 7.
